# EUROPEAN PATENT APPLICATION

(11) **EP 3 651 095 A1**
(43) Date of publication of application: **13.05.2020**
(21) Application number: 19207828.5
(22) Date of filing: 07.11.2019
(51) Int. Cl.: G06Q 10/10

(54) **SYSTEMS AND METHODS FOR AUTOMATICALLY PLACING LISTINGS ON AN EQUIPMENT PLATFORM**

(30) Priority: 09.11.2018 US 201862758272 P; 03.09.2019 US 201916558738
(71) Applicant: Honeywell International Inc., Morris Plains, NJ 07950 (US)
(72) Inventor: BUTTERS, Lisa Estipona, Morris Plains, NJ 07950 (US); SOLIS, Matthew, Morris Plains, NJ 07950 (US); MINYARD, Jason, Morris Plains, NJ 07950 (US); DINGMAN, Jeremy, Morris Plains, NJ 07950 (US); HUMPHERYS, Grant, Morris Plains, NJ 07950 (US); PERILLO, Tony, Morris Plains, NJ 07950 (US); DOTY, Keith, Morris Plains, NJ 07950 (US); SUITS, Kevin, Morris Plains, NJ 07950 (US); DAVIS, Emily, Morris Plains, NJ 07950 (US); SASEENDRAN, Saji, Morris Plains, NJ 07950 (US)
(74) Representative: Haseltine Lake Kempner LLP

(57) **Abstract**

Disclosed are systems and methods for automatically and dynamically generating listings on an equipment electronic commerce platform, by receiving a request to upload one or more spreadsheets for one or more equipment transactions; generating an upload interface including a widget for selecting one or more spreadsheet files; receiving a selection of one or more spreadsheet data files associated with the one or more equipment transactions; receiving the one or more spreadsheet data files; converting one or more entries of the one or more spreadsheet data files into one or more electronic listings; and generating an updated electronic catalog, the updated electronic catalog including the converted one or more electronic listings.

## Description

### TECHNICAL FIELD

Various embodiments of the present disclosure generally relate to placing listings on an online transactional platform, and more particularly, to generating online listings based on electronic data files uploaded from user devices.

### BACKGROUND

Data files that include spreadsheets can be used as a tool in inventory management systems. For example, a third party seller on electronic commerce (e-commerce) platform may fill or electronically maintain one or more spreadsheets to keep track of products in the seller's current inventory. Some sellers may choose to manage their inventories on a distinct and specialized inventory management application in order to, for example, take advantage of other user friendly features. However, even these sellers may utilize spreadsheets by, for example, exporting inventory data from application to one or more spreadsheet data files.

With a spreadsheet having inventory data, an operator associated with e-commerce, such as a seller or a party associated with a seller, may manually transfer inventory information from the spreadsheet to sales listings. Such a manual process may encounter various bottleneck associated with having an intermediary transcriber and/or manual work involved. Therefore, it may be highly desirable for electronic transaction platforms to recreate a more efficient and/or a uniquely automated process by which sellers' item listing data more efficiently and more optimally transform into online listings at transactional platforms, whether the transacted items are large in volume, wide in variety, or high in value(s).

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods disclosed relate to receiving a spreadsheet from a user and automatically generating one or more online listings based on the received spreadsheet.

In one embodiment, a computer-implemented method is disclosed for automatically generating listings on an equipment electronic commerce platform. The computer-implemented method may comprise: receiving, by one or more processors, a request to upload one or more spreadsheets for one or more equipment transactions; in response to receiving the request, generating, by the one or more processors, an upload interface, the upload interface including a widget for selecting one or more spreadsheet files; receiving, by the one or more processors, a selection of one or more spreadsheet data files associated with the one or more equipment transactions, at the upload interface; receiving, by the one or more processors, the one or more spreadsheet data files; converting, by the one or more processors, one or more entries of the one or more spreadsheet data files into one or more electronic listings; and generating, by the one or more processors, an updated electronic catalog, the updated electronic catalog including the converted one or more electronic listings.

In accordance with another embodiment, a computer system is disclosed for automatically and dynamically generating listings on an equipment electronic commerce platform. The computer system may comprise: a memory having processor-readable instructions stored therein; and at least one processor configured to access the memory and execute the processor-readable instructions, which when executed by the at least one processor configures the at least one processor to perform a plurality of functions, including functions for: receiving a request to upload one or more spreadsheets for one or more equipment transactions; in response to receiving the request, generating an upload interface, the upload interface including a widget for selecting one or more spreadsheet files; receiving a selection of one or more spreadsheet data files associated with the one or more equipment transactions, at the upload interface; receiving the one or more spreadsheet data files; converting one or more entries of the one or more spreadsheet data files into one or more electronic listings; and generating an updated electronic catalog, the updated electronic catalog including the converted one or more electronic listings.

In accordance with another embodiment, a non-transitory computer-readable medium containing instructions is disclosed for automatically and dynamically generating listings on an equipment electronic commerce platform. The non-transitory computer-readable medium may comprise instructions for: receiving a request to upload one or more spreadsheets for one or more equipment transactions; in response to receiving the request, generating an upload interface, the upload interface including a widget for selecting one or more spreadsheet files; receiving a selection of one or more spreadsheet data files associated with the one or more equipment transactions, at the upload interface; receiving the one or more spreadsheet data files; converting one or more entries of the one or more spreadsheet data files into one or more electronic listings; and generating an updated electronic catalog, the updated electronic catalog including the converted one or more electronic listings.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an example environment in which methods, systems, and other aspects of the present disclosure may be implemented.
FIG. 2 depicts a simplified screen shot of an exemplary user interface on which a user may initiate a upload of a spreadsheet, according to one or more embodiments.
FIG. 3 depicts a simplified screen shot of an exemplary upload user interface on which a user can select one or more spreadsheet files to upload, according to one or more embodiments.
FIG. 4 depicts a simplified screen shot of an exemplary user interface that indicates a name or metadata associated with the selected one or more spreadsheet files, according to one or more embodiments.
FIG. 5 depicts a simplified screen shot of an exemplary user interface that indicates a progress of the spreadsheet uploading and/or listing generating process, according to one or more embodiments.
FIG. 6 depicts a simplified screen shot of an exemplary user interface that displays data retrieved from the one or more spreadsheet files and allows users to customize, add, and/or manage the data, according to one or more embodiments.
FIG. 7 depicts a simplified screen shot of an exemplary user interface that indicates successful completion of the upload and the conversion process, according to one or more embodiments.
FIG. 8 depicts an exemplary method for converting uploaded spreadsheet data into electronic listings, according to one or more embodiments.
FIG. 9 depicts an exemplary method for automatically and dynamically generating listings on an equipment electronic commerce platform, according to one or more embodiments.
FIG. 10 depicts an exemplary computer device or system, in which embodiments of the present disclosure, or portions thereof, may be implemented.

### DETAILED DESCRIPTION

The following embodiments describe methods and systems for receiving a one or more spreadsheet files from a user and automatically generating one or more electronic listings based on the received spreadsheet. As described above, there is a need for a more efficient and/or automated process, by which sellers may list items on electronic transaction platforms in an automated manner regardless of whether the items to be listed are large in volume, wide in variety, or high in value. As described in more detail below, an automated and dynamic process for listing items on transactions may be implemented by receiving one or more spreadsheet data files from a user, automatically converting one or more entries of the one or more spreadsheet data files into one or more electronic listings, and generating an updated electronic catalog including the converted one or more electronic listings. As further described below, the converting of entries of one or more spreadsheet data files into one or more electronic listings may be performed by steps including, for example, storing data from uploaded spreadsheet file(s) as csv data, validating the csv data, adding the csv data into specifically designated data table(s), importing images for the electronic listings, and enabling or disabling the electronic listings.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. For example, equipment, as used herein throughout the present disclosure, may include products or services traded in primary and secondary marketplaces among organizations. As such, equipment may include, for example, aircraft, aerospace parts and components, time-constrained services such as airline gates or airport runways, or any other aerospace-related product or service traded among airlines, airports, aircraft, or aerospace original equipment manufacturers (OEMs). While the exemplary equipment online marketplace platform of the present disclosure relates to aerospace-related equipment, equipment may also include vehicles, vehicle parts and components, vehicle services, heavy equipment, heavy equipment parts and components, heavy equipment services, computing devices, computing device parts and components, computing device services, or any other products or services traded in primary and secondary marketplaces among organizations.

Certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

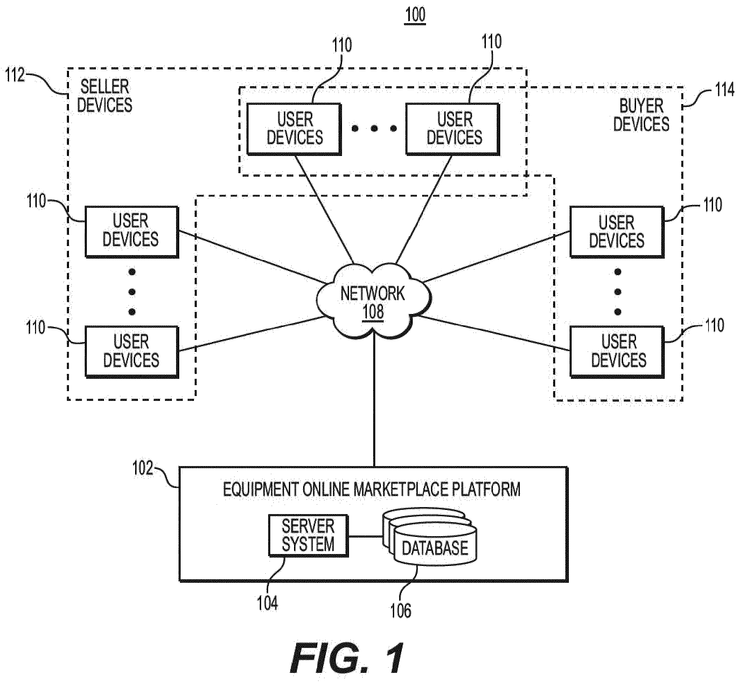

Referring now to the appended drawings, FIG. 1 depicts a block diagram of a system 100 for an equipment marketplace, according to aspects of the disclosure. As shown in FIG. 1, the system 100 for an equipment online marketplace may include an equipment online marketplace platform 102, such as an aerospace parts online marketplace platform, including server systems 104 and shared databases 106. The server systems 104 may store and execute the equipment online marketplace platform 102 for use through a network 108, such as the Internet. The equipment online marketplace platform 102 may be implemented through one or more server systems 104, such as an application program interface (API) server, web page servers, image servers, listing servers, processing servers, search servers, or other types of front-end or back-end servers.

Users may access the equipment online marketplace through the network 108 by user devices 110, such as a computing device or the like. User devices 110 may allow a user to display a web browser for accessing the equipment online marketplace from the server system 104 through the network 108. The user devices 110 may be any type of device for accessing Web pages, such as personal computing device, mobile computing devices, or the like. User devices 110 may be seller devices 112 or buyer devices 114. As such, users may be sellers and/or buyers through the equipment online marketplace. As further shown in FIG. 1, user devices 110 may be both seller devices 112 and buyer devices 114. Thus, users may access the equipment online marketplace as both sellers and buyers.

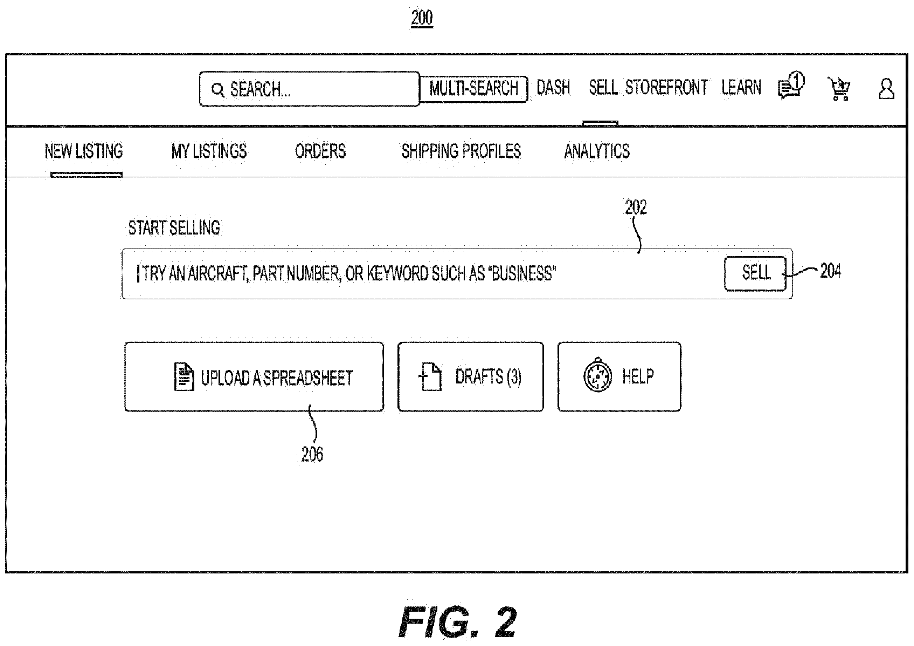

Further, the equipment online marketplace may include a seller interface and a buyer interface. The seller interface may be displayed to a user accessing the equipment online marketplace as a seller on a user device 110. The seller interface may include features to enable a seller to enter, or input, the information of the items or equipment parts (e.g., vehicle parts) that the seller desires to sell through the equipment online marketplace. For example, the seller interface may allow a seller to create, edit, or delete equipment listings based on the information of a corresponding equipment part, as described in more detail below with respect to FIGS. 2-9. The buyer interface may be displayed to a user accessing the equipment online marketplace as a buyer on a user device 110. The buyer interface may include features to enable a buyer to search for, select, and/or purchase equipment from an equipment listing created by a seller. As discussed above, the equipment online marketplace may facilitate equipment purchase transactions using various features, as further described below.

The number and arrangement of devices and networks shown in FIG. 1 are provided as an example. In practice, there may be additional devices, fewer devices and/or networks, different devices and/or networks, or differently arranged devices and/or networks than those shown in FIG. 1. Furthermore, two or more devices shown in FIG. 1 may be implemented within a single device, or a single device shown in FIGS. FIG. 1 may be implemented as multiple, distributed devices.

FIG. 2 depicts a simplified screen shot of an exemplary user interface 200 on which a user may initiate an upload of a spreadsheet, according to one or more embodiments. In response to a user selection to enter a seller interface (e.g., a user selection of "Sell" tab in the top menu bar as shown in the exemplary user interface 200), the server system 104 may load and display one or more pages as one or more interfaces included in the seller interface. These one or more interfaces may allow sellers to initiate creation of a new listing (e.g., selection of "new listing" tab in the top sub-menu bar as shown in the exemplary user interface 200) for an equipment online marketplace platform 102.

On the seller interface, a seller (e.g., a user of the equipment online marketplace platform 102 acting as a third party seller) may be presented with one or more options in order to generate a new listing. One option may be, for example, to start by searching for a particular product at an existing database in communication with the user device 110, by typing in one or more keywords at an input feature 202 and selecting a keyword-based sales initiation trigger 204. A user selection of the keyword-based sales initiation trigger 204 may configure the server system 104 to initiate a process of retrieving existing information pertaining to a particular product (e.g., attributes, metadata, former listing, competitor listing, etc.) from an existing database, and generating a listing based on the existing information. Another option to generate a new listing may be, for example, to allow a seller to enter one or more attributes of a product to list for sale by typing in the one or more product attributes at an input feature 202, selecting a keyword-based sales initiation trigger 204, and subsequently entering additional information to create a brand new listing of a product (e.g., filling out information in one or more data fields about the product to be listed).

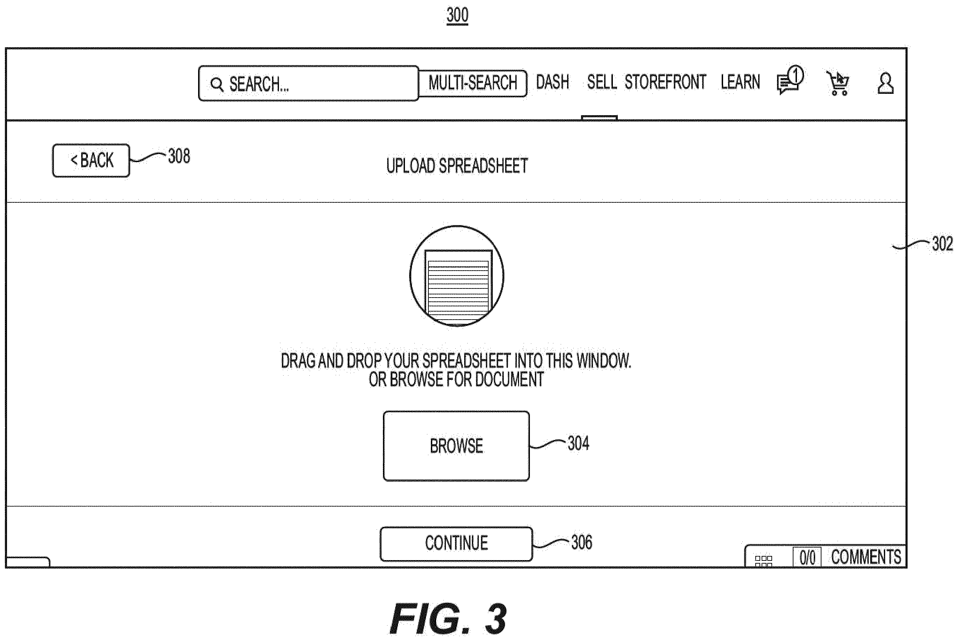

In accordance with the present disclosure, the server system 104 may, via a user device 110, provide a seller (e.g., a user of the equipment online marketplace platform 102 acting as a third party seller) with an option to upload one or more spreadsheets as a way to generate a new listing. In order to provide this option, the seller interface may include, for example, a spreadsheet upload initiator 206 for selection by sellers, as shown in FIG. 2. This option may be advantageous, especially for sellers who wish to list more than one items in bulk, as further described below with respect to FIGS. 3-9.

FIG. 3 depicts a simplified screen shot of an exemplary upload user interface 300 on which a user can select one or more spreadsheet files to upload, according to one or more embodiments. The server system 104 may be configured to generate an exemplary upload user interface 300 on a user device 110, in response to a user selection of a spreadsheet upload initiator 206 (e.g., the spreadsheet upload initiator 206 on exemplary user interface 200 shown in FIG. 2) or the like. The exemplary upload user interface 300 may include a back button 308 that is configured to navigate a user on the user device 110 to navigate back to a previous page (e.g., the exemplary user interface 200). The exemplary upload user interface 300 may comprise one or more upload features (e.g., one or more widgets or any other types of interface by which a user can transmit one or more spreadsheet files to the equipment online marketplace platform 102), as discussed in more detail below.

The seller interface may include one or more upload features on the exemplary user interface 300. For example, the seller interface may include a browse function 304 or any other widget that allows a user to search for files in the file directory associated with the user device 110 (e.g., local hard drive of the user device 110 or an external storage in communication with the user device 110) and select one or more of the spreadsheet files in the file directory for uploading to the equipment online marketplace platform 102. Additionally, or alternatively, the seller interface may include a drag-and-drop widget 302 that allows a user to select one or more files in a file directory associated with the user device 110 (e.g., local hard drive of the user device 110 or an external storage in communication with the user device 110), and drag the one or more spreadsheet files in the file directory to the drag-and-drop widget 302 to communicate a request (e.g., to the user device 110 and/or the server system 104) for uploading the selected files to the equipment online marketplace platform 102.

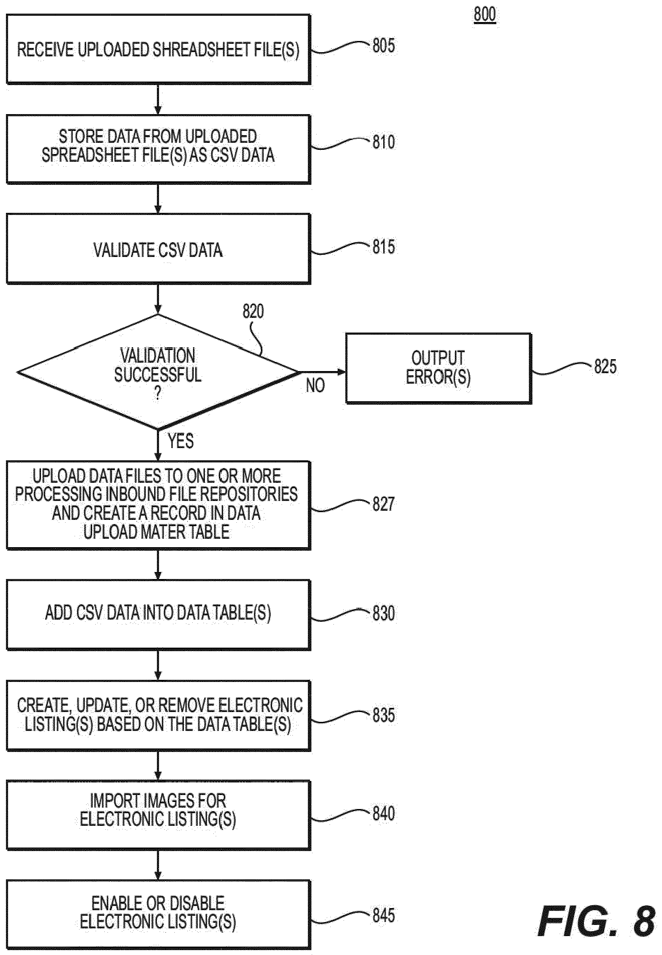

The one or more upload features, such as the drag-and-drop widget 302 and/or the browse function 304, may allow user selection of one spreadsheet file at a time, or alternatively, allow a simultaneous selection of multiple spreadsheet files. If multiple spreadsheet files are selected, all entries of the respective files may be converted into seller listings via techniques described in more detail below with respect to FIG. 8. The exemplary user interface 300 may include a continue button 306, to allow the user to confirm that the user wishes to upload the one or more selected spreadsheet files.

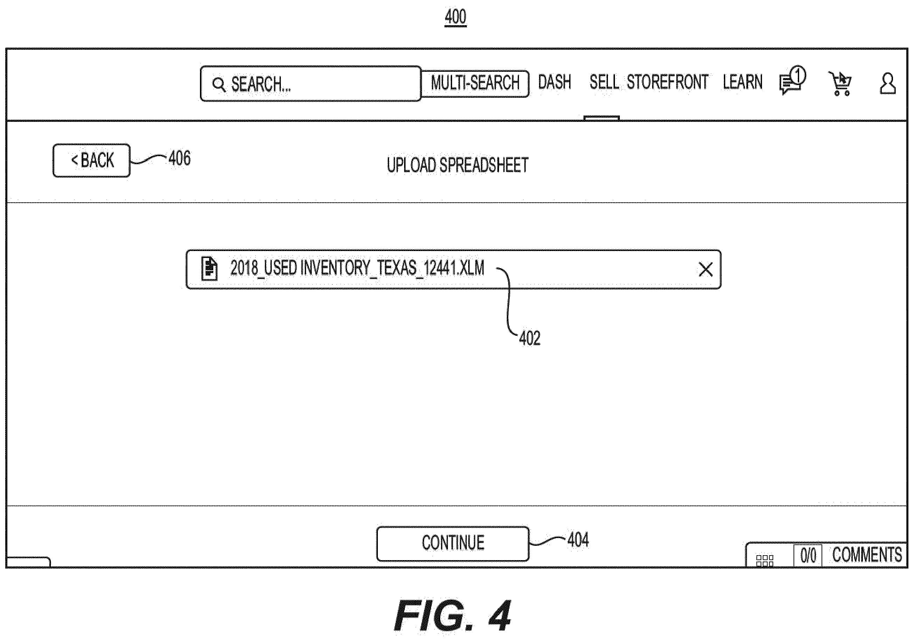

FIG. 4 depicts a simplified screen shot of an exemplary user interface 400 which indicates a name or metadata associated with the selected one or more spreadsheet files, according to one or more embodiments. The exemplary user interface 400 may be loaded on a user device 110 in response to, for example, a user selection of the continue button 306 at the exemplary user interface 300 shown in FIG. 3. Once the exemplary user interface 400 is loaded on a user device 110, the user of the user device 110 may navigate back to a previous page (e.g., the exemplary user interface 300) by selecting a back button 406 included in the exemplary user interface 400.

In the exemplary user interface 400, a file identifier 402 associated with one or more selected spreadsheets file may be displayed to the user, in order to, for example, allow users to review that the one or more spreadsheet files have been correctly and accurately selected. For example, the file identifier 402 may be configured to display a name of a selected file (e.g., a file name or a name otherwise associated with the selected file), or another metadata associated with the selected file. Because of the reduction in user mistakes or oversight resulting from this additional review feature, this step may provide a significant technical advantage to the overall equipment online marketplace platform 102, of reducing the likelihood of expending unnecessary bandwidth or memory space. In some implementations, the exemplary user interface 400 may display a file identifier 402 for each of a plurality of spreadsheet files in such way that multiple identifiers of spreadsheet files are displayed on the user interface, if multiple spreadsheet files have been selected for upload (e.g., via upload features 302 or 304 shown in FIG. 3). Additionally, the exemplary user interface 400 may load a continue button 404, to allow the user to indicate a confirmation that the file identifier(s) 402 correctly and accurately shows the one or more spreadsheet files selected for upload.

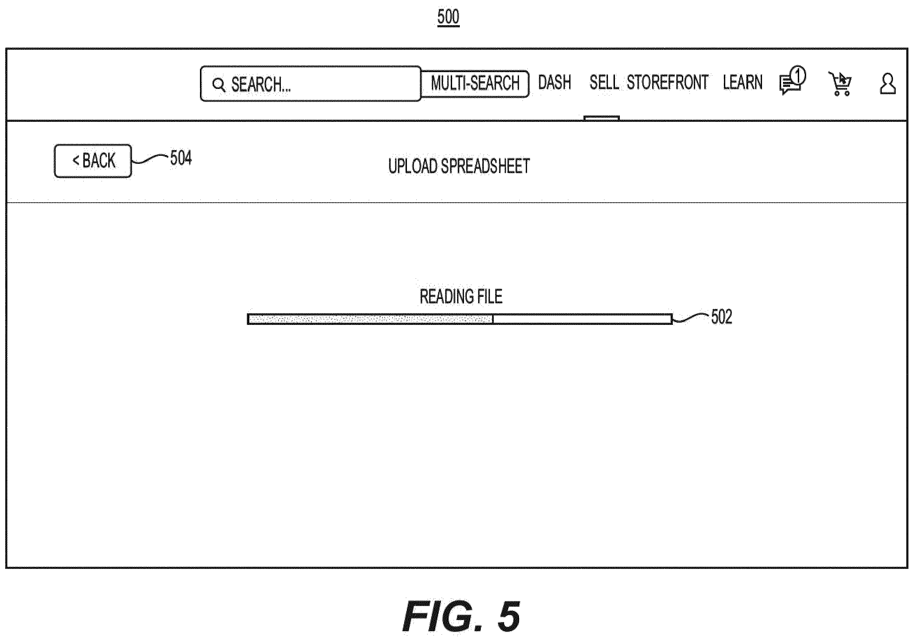

FIG. 5 depicts a simplified screen shot of an exemplary user interface 500 that indicates a progress of the spreadsheet uploading and/or listing generating process, according to one or more embodiments. Once the exemplary user interface 500 is loaded on a user device 110, the user of the user device 110 may navigate back to a previous page (e.g., the exemplary user interface 400) by selecting a back button 504 included in the exemplary user interface 500. In some implementations, a progress indicator 502 of the upload process may be displayed to the user, in order to, for example, to notify the user that progress is being made without any noticeable technical glitch or hindrances that may interfere with the uploading and/or listing generating process. The progress indicator 502 may, for example, be configured to graphically indicate of the progress of the upload of the one or more selected spreadsheet files, the progress of reading or retrieving data in the one or more selected spreadsheet files, the progress of converting the entries of the first spreadsheet file into one or more online listings, the progress of generating an updated online catalog including the one or more online listings, or any combination thereof.

In some implementations, converting the entries of the selected spreadsheet file into one or more online listings may include retrieving the spreadsheet entries into an independent file (e.g., a data object file or a csv file) and then converting that data object file into a particular format (e.g., XML or any other web-based format), as explained in more detail below with respect to FIG. 8. Such retrieval and/or conversion may be performed using an application programming interface (API), a macro, Visual Basic for Applications, JavaScript, or the like. Alternatively, converting the entries of the selected spreadsheet file into one or more online listings may include exporting the spreadsheet file directly into a particular out format (e.g., XML or any other web-based format). Such retrieval and/or conversion may be performed using an application programming interface (API), a macro, Visual Basic for Applications, JavaScript, or the like.

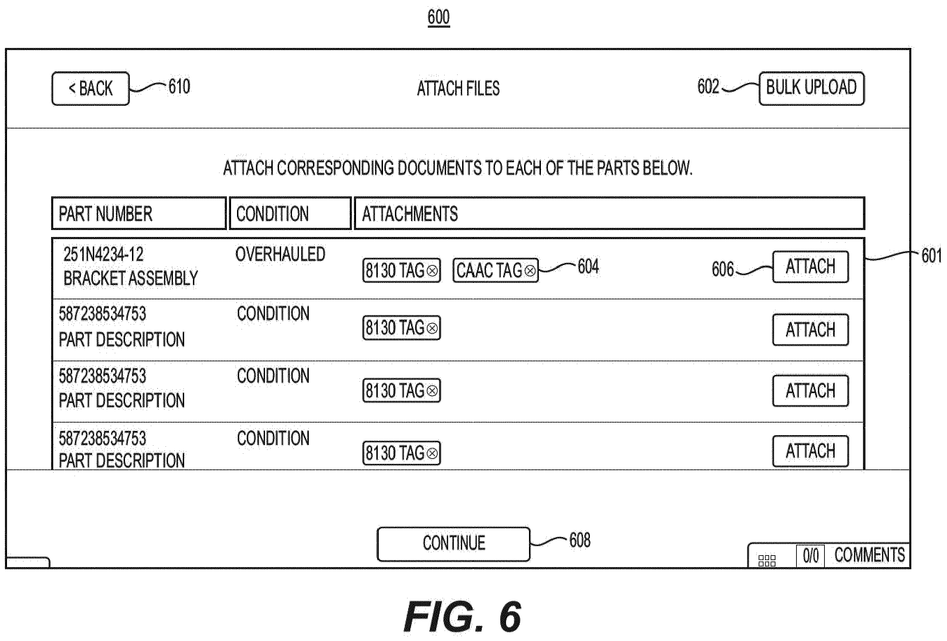

FIG. 6 depicts a simplified screen shot of an exemplary user interface 600 that displays data retrieved from the one or more spreadsheet files and allows users to customize, add, and/or manage the data, according to one or more embodiments. In some implementations, the server system 104 may generate the exemplary user interface 600 for loading at the one or more user devices 110, in response to receiving a user request to manage data associated with seller listings on the equipment online marketplace platform 102. For example, the server system 104 may include a link or a trigger (e.g., button, icon, menu item, command prompt, etc.) in any one or more pages or interfaces associated with the equipment online marketplace platform 102. A user on a user device 110 who selects this link or trigger may be directed to the exemplary user interface 600 on the user device 110. One example of a trigger for entering the exemplary user interface 600 may be the "My Listings" tab shown at the menu bar included in the exemplary user interface 200 of FIG. 2. Once the exemplary user interface 600 is loaded on a user device 110, the user on the user device 110 may also navigate back to a previous page (e.g., the exemplary user interface 500) by selecting a back button 610 included in the exemplary user interface 600.

In the exemplary user interface 600, the server system 104 may load a seller's listings data in order to, for example, allow the user to manage (e.g., remove, modify, confirm, and/or add) data entries associated with one or more listings. In some implementations, existing data entries may correspond to data retrieved from one or more uploaded spreadsheet data files (e.g., one or more spreadsheet files uploaded in the exemplary user interface 300 or identified in file identifier 402 of the exemplary user interface 400). Additionally, or alternatively, existing data entries may correspond to listings data entered by users in one or more data entry methods other than the spreadsheet data file upload option (e.g., listings data entry followed by an keyword input in input feature 202 and selection of a keyword-based sales initiation trigger 204 in FIG. 2).

A viewer section 601 may be displayed on the exemplary user interface 600, in order to, for example, allow the user to confirm that the data entries of one or more uploaded spreadsheet data files (e.g., a spreadsheet file corresponding to the file identifier 402) have been correctly and accurately read by the server system 104. Additionally, embedded interface tools or widgets (e.g., an attachment viewer feature 604 and/or a selection feature 606) may be loaded on a viewer section 601 of the exemplary user interface 600, for prompting users for modifications or additions on file attachments for one or more equipment parts, in order to, for example, provide opportunities for users to provide additional descriptions, text edits, corrections of any kind, or image files associated with the seller listings. Until the user chooses to proceed to the next step (e.g., by selecting the icon 608 on the exemplary user interface shown in FIG. 6), the user may remain on this interface or widget, and review, modify, and/or customize the listings.

In some implementations, the server system 104 may load a bulk upload selector 602 on the exemplary user interface 600, which triggers loading of a spreadsheet file upload user interface (e.g., the exemplary upload user interface 300 depicted in FIG. 3) on the user device 110 of the user. Under these implementations, at any time a user on the exemplary user interface 600 wishes to upload one or more spreadsheet files for updating or creating electronic listings, the user may select the bulk upload selector 602 in order load a spreadsheet file upload user interface and upload one or more spreadsheet files to be used for the user's electronic listings. For example, when the server system 104 receives a user selection at the selector 602, the server system 104 may cause the user device 110 of the user to display the exemplary upload user interface 300. Once the exemplary user interface 300 receives a selection of a spreadsheet file, the server system 104 may cause the user device 110 to redirect the user through subsequent interfaces, such as, for example, exemplary interfaces 400, 500, and 600.

As shown in FIG. 6, an automated process of accepting one or more spreadsheet files may result in an efficient bulk listing operation by the equipment online marketplace platform 102. From the user's view point, the listing operation may be completed in one iteration, whether the user is listing 2 products or 20 products. This amounts to a significant improvement of electronic commerce server systems, because conventional manual methods of transferring each inventory entry into a formal listing required multiple iterations while also facing substantial bottleneck associated with inefficiencies and inaccuracies associated with intermediary processing iterations. Thus, the bulk listing operations may result in faster processing and more efficient utilization of the computing power consumed by an equipment online marketplace platform.

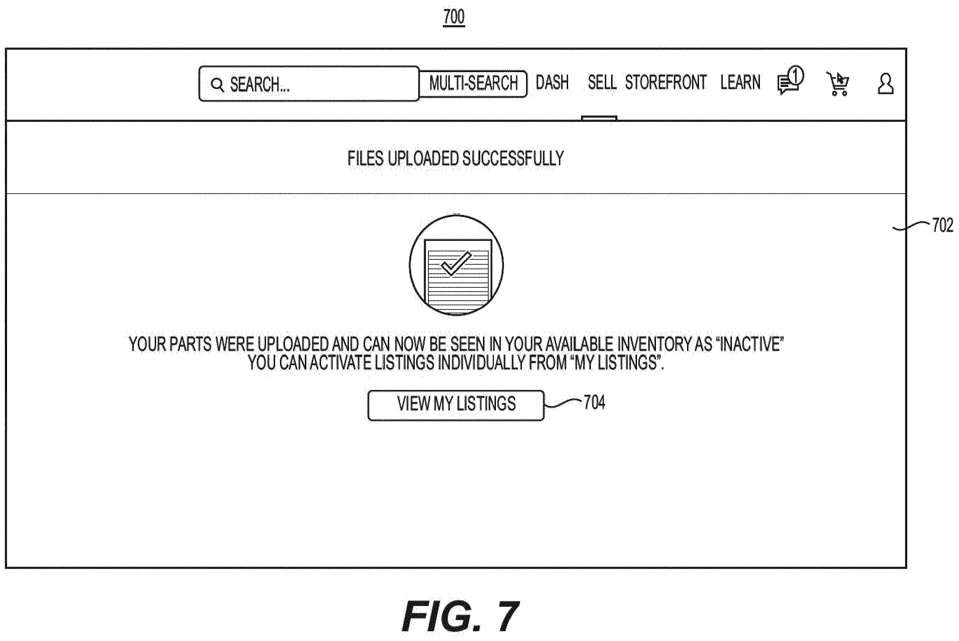

FIG. 7 depicts a simplified screen shot of an exemplary user interface 700, which indicates a successful completion of the upload and the conversion process, according to one or more embodiments. In one or more embodiments, a confirmation of the successful completion of the process may be displayed to the user at a notification section 702 of the interface, in order to, for example, to notify users that (i) the user's spreadsheet has been effectively converted into sales listings on the equipment online marketplace platform 102, (ii) the user was able to check the accuracy of entries retrieved from the spreadsheet (e.g., shown in FIG. 6), (iii) the user was able to make any customizations or further attachments if deemed necessary (e.g., shown in FIG. 6), and/or (iv) the user is now able to activate the listings for publication (e.g., if timing is of essence to the user). Furthermore, the exemplary user interface 700 may load a view my listings selector 704 that, when selected by the user, enables loading of another user interface (not shown) where the user may view and/or activate listings.

FIGS. 2-7 are each provided merely as a depiction of an example user interface. For each of these user interfaces represented in FIGS. 2-7, other examples (e.g., a differently arranged interface) are possible and may differ in arrangement, form, or design from what was described with regard to FIGS. 2-7.

FIG. 8 depicts an exemplary method 800 for converting uploaded spreadsheet data into electronic listings, according to one or more embodiments. First, the server system 104 may receive one or more uploaded spreadsheet files (Step 805). The server system 104 may receive the one or more spreadsheet files by, for example, prompting a user at a user device 110 to initiate (e.g., select spreadsheet upload initiator 206 or bulk upload selector 602) a spreadsheet file upload user interface (e.g., the exemplary upload user interface 300), and receiving one or more user-selected spreadsheet files at the spreadsheet file upload user interface. As used herein, a spreadsheet file and a spreadsheet data file may be interchangeable terms. The server system 104 may then store the received spreadsheet files as a CSV (comma-separated values) data file storing CSV data (Step 810).

The server system 104 may then validate the CSV data (Step 815), based on various validation rules. The server system 104 may read the CSV data and determine whether the CSV data satisfy a set of validation rules (Step 820). An exemplary set of validation rules is shown in Table 1 below.

**Table 1**

| Data entries to validate | Validation rule |
|---|---|
| CSV file column count | matches with file column count pre-configured in administrative settings of the marketplace platform 102 |
| CSV file maximum row count | matches with maximum row count pre-configured in administrative settings of the marketplace platform 102 |
| CSV file row Sale Price | should not be greater than CSV file row List Price |
| CSV file row Condition | must be one of predefined conditions in a condition list predefined in administrative settings of the marketplace platform 102 |
| Serialized product | (If CSV file row contains serialized product) quantity should not be more than 1 and PN_Not_Serialized value should be 0 |
| Non-serialized product | (If CSV file row contains non-serialized product) Quantity should not contain negative and PN_Not_Serialized value must be 1 |
| CSV file row | must not contain blank value for the following attributes: part number, part description, category, condition, list price, and quantity |
| CSV file row category code | must be one of predefined category code configured in administrative settings of the marketplace platform 102 |

If the CSV data is not successfully validated at Step 820 (e.g., the server system 104 determines that the CSV data does not satisfy one or more of the validation rules), the server system 104 may output error(s) to the user at the user device 110 (Step 825). For example, the server system 104 may display first 100 errors to the user on the user device 110 (e.g., in a page or interface loaded after the exemplary user interface 500 depicted in FIG. 5). Additionally, or alternatively, if the server system 104 determines that the CSV data is not successfully validated at Step 820, the server system 104 may upload the CSV data files and/or the one or more uploaded spreadsheet files to one or more failed inbound file repositories. Such one or more failed inbound file repositories may reside in one or more databases in communication with the server system 104, such as, for example, database 106.

If the CSV data is successfully validated at Step 820, the server system 104 may upload the CSV data files and/or the one or more uploaded spreadsheet files to one or more processing inbound file repositories (Step 827). Such one or more processing inbound file repositories may reside in one or more databases in communication with the server system 104, such as, for example, database 106. Additionally, or alternatively, if the server system 104 determines that the CSV data is successfully validated at Step 820, the server system 104 may create a record in a data upload master table (e.g., a master data table residing in one or more databases in communication with the server system 104, such as, for example, database 106), with the record flagged as being in a pending status.

After a successful validation, the CSV data may be added as one or more entries in data table(s) (Step 830). In order to do so, first, the server system 104 may read the data upload master table, periodically and/or reactively, and identify all data files (e.g., CSV data files and/or spreadsheet files) having a pending or an in-progress status. For example, a CSV data file, whose record was created in the data upload master table, may be identified from the data upload master table because it was flagged with a pending status in Step 827. Then, for each of the identified one or more data files, the server system 104 may create a record in a data upload child table (e.g., a data table residing in one or more databases in communication with the server system 104, such as, for example, database 106). The record created in the data upload child table may include, for example, any subset of data from the CSV data and/or any metadata associated with the CSV data. Then, the record in the data upload child table, as well as the corresponding record in the data upload master table, may be both flagged as being in a temporary status.

The server system 104 may also read, periodically and/or reactively, at least the data upload master table to identify any data file whose record has been flagged with a temporary status. If such data files are successfully identified, the server system 104 may create, update, or remove electronic listing(s) at the equipment online marketplace platform 102, based on the data table(s) such as the data upload master table and/or the data upload child table (Step 835). In order to do so, first, when a data file in a temporary status is identified, the server system 104 may read all records corresponding to the data file in both the data upload child table and the data upload master table. Then, the server system may determine whether the product identifier (e.g., SKU) for each record is new or existing. A product identifier may be determined to be new, if, for example, the server system 104 determines that equipment online marketplace platform 102 is not hosting any active and/or inactive listing pertaining to that product identifier. Alternatively, the server system 104 may store and apply any other preconfigured rule for determining whether a product identifier is deemed to be new. A product identifier may be determined to be existing if, for example, the server system 104 determines that equipment online marketplace platform 102 has an existing listing and/or a seller record associated with the product identifier. Alternatively, the server system 104 may store and apply any other preconfigured rule for determining whether a product identifier is deemed to be existing.

If the server system 104 determines that the product identifier at the temporary data file(s) has existing listing data (e.g., existing listing data associated with the product identifier at a database in communication with the equipment online marketplace platform 102), the server system 104 may determine whether the temporary data file(s) (e.g., the data files with records flagged with the temporary status as described above) have any difference when compared to the existing listing data. If difference(s) exist, the existing listing data may be updated with the identified difference(s). For example, if new document or record is found in a temporary data file associated with an existing data, the new document or record may be added to the existing listing data. As another example, if no document is found under a particular record in a temporary CSV data file (e.g., a record intentionally left blank or a record having an intentionally removed data), then a corresponding record in the existing listing data having an outdated information may be removed from the existing listing data.

If the seller system 104 determines that the product identifier is new, the server system 104 may assign an identifier of a user (e.g., a first user who uploaded the temporary data file(s), or another user who is designated by the first user to be a seller) as a seller of a new listing associated with the product identifier. The server system 104 may also attach all of the corresponding temporary data file(s) to the new listing data.

After creating a new listing data or updating an existing listing data, the server system 104 may also update metadata (e.g., a binary flag indicating success regarding the listing update, a time stamp associated with the listing update, or any comment associated with the listing update) in the data upload child table. In addition, the server system 104 may also update corresponding records in the data upload master table, with the status being changed to image in progress. The server system 104 may also capture any technical error or missing document error that was generated in the process of creating the new listing data or updating the existing listing data. If any technical error or missing document error was captured, the server system 104 may transmit or display a notification with a missing document list and/or error notification to the seller associated with the listing data and/or a designated administrator of the equipment online marketplace platform 102.

The server system 104 may also read, periodically and/or reactively, the data upload master table to identify any data file whose record has been flagged with the image in progress status. If the server system 104 finds such data file(s), the server system 104 may identify all corresponding data, including one or more product identifiers, from at least the data upload child table, and import one or more images associated with the one or more product identifiers. The one or more images may be imported from, for example, the data file(s) themselves, database 106, or any external data source in communication with the server system 104. After the one or more images have been imported, the server system 104 may determine whether the updated listing data complies with predetermined rules associated with image count and/or document count. If the updated listing is determined to be compliant based on the predetermined rules, the listing may be automatically enabled, by the server system 104, on the equipment online marketplace platform 102. (Step 845). If the updated listing is not determined to be compliant based on the predetermined rules, the listing may be disabled. An exemplary set of the predetermined rules is shown in Table 2 below.

**Table 2**

| Attribute | Validation rule for enabling listing |
|---|---|
| Serialized Product with New condition | Should have at least one image to enable listing |
| Serialized product with condition other than new | Should have at least one image and one document to enable listing |
| Non-serialized product | Should have one image |
| Any product | Enable if a listing for the product exists both on the platform, and in the incoming data files. (Disable if the listing exists on the platform but not in the data files.) |

After successfully completing an operation of enabling or disabling electronic listing(s) at the equipment online marketplace platform 102 (Step 845), the server system 104 may update metadata (e.g., a binary flag indicating successful completion of each enable/disable operation, a time stamp associated with the each listing update, or any comment associated with the listing update) in the data upload child table. In addition, the server system 104 may also update corresponding records in the data upload master table, with the status being changed to complete. Furthermore, the server system 104 may transmit or display one or more notifications indicating the completion of the operation, to (i) a seller associated with the listing(s), and/or (ii) a designated administrator of the equipment online marketplace platform 102. The one or more notifications may indicate, for example, that one or more product listings have been successfully created, that one or more product listings have been successfully updated, that one or more listings have been enabled, and/or that one or more listings have been disabled. Additionally, or alternatively, the one or more notifications may indicate, for example, an enabled product listing count and/or disabled product listing count, as well as a list of missing images if applicable. After the operation of enabling or disabling electronic listing(s) at the equipment online marketplace platform 102 (Step 845), the server system may re-index data (e.g., data upload master table, data upload child table, etc.).

Although FIG. 8 shows example blocks of process 800, in some implementations, process 800 may include additional blocks, fewer blocks, different blocks, or differently arranged blocks than those depicted in FIG. 8. Additionally, or alternatively, two or more of the blocks of process 800 may be performed in parallel.

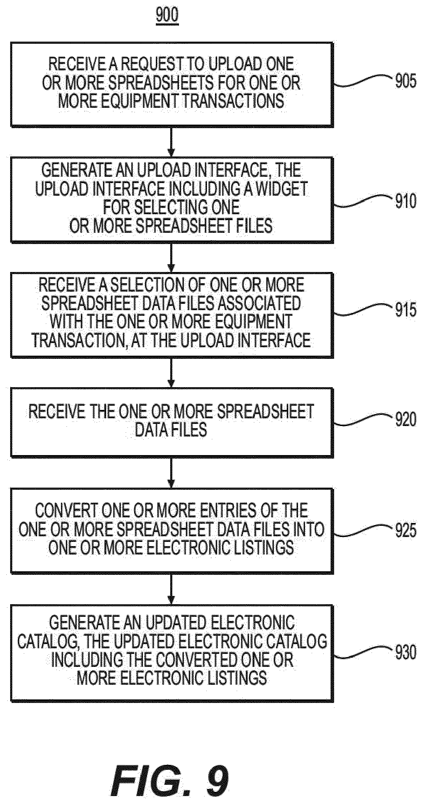

FIG. 9 depicts an exemplary method for automatically and dynamically generating listings on an equipment electronic commerce platform, according to one or more embodiments. The server system 104 may first receive a request to upload one or more spreadsheets for one or more equipment transactions (Step 905). In response to receiving the request, the server system 104 may generate an upload interface, the upload interface including a widget for selecting one or more spreadsheet files (Step 910). The server system 104 may then receive a selection of one or more spreadsheet data files associated with the one or more equipment transactions, at the upload interface (Step 915). The server system 104 may also receive the one or more spreadsheet data files (Step 920). The server system 104 may convert one or more entries of the one or more spreadsheet data files into one or more electronic listings (Step 925). For example, the converting of Step 925 may be performed using the exemplary method 800 discussed in more detail above with respect to FIG. 8. The server system 104 may then generate an updated electronic catalog, the updated electronic catalog including the converted one or more electronic listings (Step 930).

Although FIG. 9 shows example blocks of process 900, in some implementations, process 900 may include additional blocks, fewer blocks, different blocks, or differently arranged blocks than those depicted in FIG. 9. Additionally, or alternatively, two or more of the blocks of process 900 may be performed in parallel.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-9 may be implemented using a processor device. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

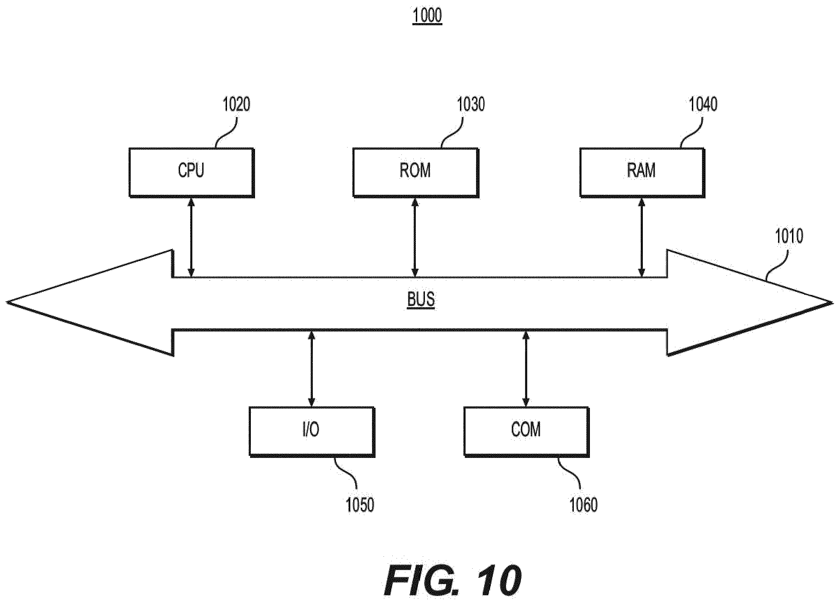

As shown in FIG. 10, a device 1000 used for performing the various embodiments of the present disclosure, such as user device 110 and/or the server system 104, may include a central processing unit (CPU) 1020. CPU 1020 may be any type of processor device including, for example, any type of special purpose or a general-purpose microprocessor device. As will be appreciated by persons skilled in the relevant art, CPU 1020 also may be a single processor in a multi-core/multiprocessor system, such system operating alone, or in a cluster of computing devices operating in a cluster or server farm. CPU 1020 may be connected to a data communication infrastructure 1010, for example, a bus, message queue, network, or multi-core message-passing scheme.

A device 1000, such as user device 110, the server system 104, or computer systems of any one or more entities associated with an equipment dismantlement process, may also include a main memory 1040, for example, random access memory (RAM), and may also include a secondary memory 1030. Secondary memory, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 1030 may include other similar means for allowing computer programs or other instructions to be loaded into device 1000. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 1000.

A device 1000 may also include a communications interface ("COM") 1060. Communications interface 1060 allows software and data to be transferred between device 1000 and external devices. Communications interface 1060 may include a modem, a network interface (such as an Ethernet card), a communications port, a PCMCIA slot and card, or the like. Software and data transferred via communications interface may be in the form of signals, which may be electronic, electromagnetic, optical, or other signals capable of being received by communications interface 1060. These signals may be provided to communications interface 1060 via a communications path of device 1000, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. A device 1000 also may include input and output ports 1050 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for automatically and dynamically generating listings on an equipment electronic commerce platform, the method comprising:
receiving, by one or more processors, a request to upload one or more spreadsheets for one or more equipment transactions;
in response to receiving the request, generating, by the one or more processors, an upload interface, the upload interface including a widget for selecting one or more spreadsheet files;
receiving, by the one or more processors, a selection of one or more spreadsheet data files associated with the one or more equipment transactions, at the upload interface;
receiving, by the one or more processors, the one or more spreadsheet data files;
converting, by the one or more processors, one or more entries of the one or more spreadsheet data files into one or more electronic listings; and
generating, by the one or more processors, an updated electronic catalog, the updated electronic catalog including the converted one or more electronic listings.

2. The method of claim 1, wherein the converting the one or more entries of the one or more spreadsheet data files into one or more electronic listings further comprises:
storing, by the one or more processors, the received one or more spreadsheet data files as one or more CSV (comma-separated values) data files, the one or more CSV data files each including CSV data.

3. The method of claim 2, wherein the converting the one or more entries of the one or more spreadsheet data files into one or more electronic listings further comprises:
validating, by the one or more processors, each of the one or more CSV data files based on one or more validation rules associated with the one or more equipment transactions.

4. The method of claim 3, wherein the converting the one or more entries of the one or more spreadsheet data files into one or more electronic listings further comprises:
in response to detecting that the one or more CSV data files have been validated, uploading, by the one or more processors, the validated one or more CSV data files to one or more processing inbound file repositories;
creating in a data upload master table, by the one or more processors, a record associated with the uploaded validated one or more CSV data files in the one or more processing inbound file repositories; and
adding, by the one or more processors, child data indicative of the uploaded validated one or more CSV data files to a data upload child table.

5. The method of claim 4, wherein the converting the one or more entries of the one or more spreadsheet data files into one or more electronic listings further comprises:
identifying, by the one or more processors, one or more new product identifiers, based on the data upload child table; and
for each of the identified one or more new product identifiers, assigning, by the one or more processors, an identifier of a seller to the new product identifier.

6. The method of claim 5, wherein the converting the one or more entries of the one or more spreadsheet data files into one or more electronic listings further comprises:
identifying, by the one or more processors, one or more existing product identifiers, based on the data upload child table and one or more existing listings at the equipment electronic commerce platform; and
updating, by the one or more processors, the one or more data upload child table based on the identified one or more existing product identifiers and the uploaded validated one or more CSV data files in the one or more processing inbound file repositories.

7. The method of any preceding, further comprising:
generating, by the one or more processors, a listings management user interface for a first seller, the listings management user interface including a visual representation for each file attached by the first seller.

8. The method of claim 7, further comprising:
receiving, by the one or more processors, a request from the first seller to manage listings associated with the first seller; and
in response to receiving the request to manage listings, loading, by the one or more processors, the listings management user interface on a user device associated with the first seller.

9. A computer system for automatically and dynamically generating listings on an equipment electronic commerce platform, the computer system comprising:
a memory having processor-readable instructions stored therein; and
at least one processor configured to access the memory and execute the processor-readable instructions, which when executed by the at least one processor configures the at least one processor to perform a plurality of functions, including functions for:
receiving a request to upload one or more spreadsheets for one or more equipment transactions;
in response to receiving the request, generating an upload interface, the upload interface including a widget for selecting one or more spreadsheet files;
receiving a selection of one or more spreadsheet data files associated with the one or more equipment transactions, at the upload interface;
receiving the one or more spreadsheet data files;
converting one or more entries of the one or more spreadsheet data files into one or more electronic listings; and
generating an updated electronic catalog, the updated electronic catalog including the converted one or more electronic listings.

10. The system of claim 9, wherein the converting the one or more entries of the one or more spreadsheet data files into one or more electronic listings further comprises:
storing the received one or more spreadsheet data files as one or more CSV (comma-separated values) data files, the one or more CSV data files each including CSV data.
